# EUROPEAN PATENT SPECIFICATION

(11) **EP 3 216 338 B1**
(45) Date of publication and mention of the grant of the patent: **05.12.2018**
(21) Application number: 17159116.7
(22) Date of filing: 03.03.2017
(51) Int. Cl.: A01D 43/10, A01B 59/06

(54) **LAWNMOWER WITH QUICK FASTENING FOR FRONTAL IMPLEMENTS**
RASENMÄHER MIT SCHNELLER BEFESTIGUNG FÜR VORDEREN GERÄTE
TONDEUSE AVEC FIXATION RAPIDE POUR OUTILS FRONTAUX

(30) Priority: 07.03.2016 IT UA20161422
(43) Date of publication of application: 13.09.2017
(73) Proprietor: Stiga S.p.A. in breve anche St. S.p.A., 31033 Castelfranco Veneto (TV) (IT)
(72) Inventor: CALABRO', Alberto, 35017 PIOMBINO DESE (PD) (IT)
(74) Representative: Mittler, Andrea

(56) References cited:
- EP-A1- 2 676 534
- WO-A1-2007/136313
- US-A- 3 958 399
- US-A- 4 280 317

## Description

The present invention relates to a lawnmower with quick fastening for frontal implements.

Lawnmowers comprising fastening means between a front portion of the lawnmower and frontal implements of the lawnmower are known from the prior art such as for example US-2010/0170212, US-7302765-B1 and two patents to the applicant: WO-2007/136313 and EP-2676534-B1. EP-2676534-B1 describes a lawnmower comprising quick fastening means which comprise a first portion which is rotatably associated with a front portion of the lawnmower and a second portion which is fixed to a frontal implement and comprising a hook-shaped extension which is adapted to engage separably a second cylindrical portion of the first portion of the fastening means. The hook shape of the second portion of the fastening means follows the outer shape of the second cylindrical portion, so as to be disadvantageously wide and enlarged, with danger of escaping in a risky manner. It is disadvantageously easy that the first portion inadvertently and dangerously disengages from the second portion of the quick fastening means. The first portion of the quick fastening means also comprises an extension facing the back of the lawnmower along the longitudinal axis. Said extension is adapted to be pressed by a foot from the top downwards to favor the escape of the locking pivot from the locking notch, permitting the first portion to rotate thus disengaging it from the second portion. It is disadvantageously easy that simply by pressing with the foot on the extension of the lever, the connection does not disengage due to a locking pivot being wedged into a locking notch and encountering a resistance which, in order to be overcome, requires a manual intervention by the operator who must force the engaging means to unwedge the locking pivot from the locking notch and permit the frontal implement to be disconnected.

In order to overcome the disadvantage of the first portion inadvertently disengaging from the second portion, WO-2007/136313 did not provide for the hook shape of the second portion of the fastening means, but provides for the second portion of the fastening means to have a through hole adapted to allow the rotation of the second cylindrical portion without the possibility of escaping. The second cylindrical portion has a section of smaller diameter as compared to the first cylindrical portion. Disadvantageously, these fastening means cannot be considered to be quick since the frontal implement cannot be easily and quickly uncoupled from the lawnmower, unless the second portion is manually dismantled from the second cylindrical portion by acting on screws and bolts. An alternative is also provided in this document, where the second cylindrical portion might have a hook-shaped portion, but it is disadvantageously necessary to include a latch-key to be manually wedged between the first and the second portions of the fastening means so as to keep the connection between the lawnmower and the frontal implement tight. The key may disadvantageously be inadvertently removed by the vibrations or forgotten or lost by the operator, thus making the connection unsafe, which connection is no longer automatic nor quick.

Disadvantageously, in both previous patents to the applicant, the fastening means were too large and require a considerable space to be mounted and handled.

It is the object of the present invention to provide a lawnmower comprising fastening means between a front portion of a lawnmower and frontal implements of the lawnmower, in which the fastening means must allow a quick connection between lawnmower and implement which does not wedge, allows a safe connection even in view of vibrations and jamming or ground resistances, allows to uncouple the implement from the lawnmower by means of a single, easy operation, the fastening means being smaller and compact in size.

According to the invention, such an object is achieved by a lawnmower comprising quick fastening means between a front portion of the lawnmower and a frontal implement of the lawnmower according to claim 1.

These and other features of the present invention will become more apparent from the following detailed description of a practical embodiment thereof, shown for non-limiting purposes, in the accompanying drawings, in which:
Figure 1 shows a diagrammatic view of a lawnmower mounting a frontal implement by means of quick fastening means;
Figure 2 shows a perspective view of the quick fastening means between the lawnmower and the frontal implement of the lawnmower;
Figure 3 shows an exploded view of the quick fastening means in Figure 2;
Figure 4 shows a side view of a first and a second portion of the quick fastening means in a disengagement position;
Figure 5 shows a side view of the quick fastening means in an engagement position between the first and the second portions;
Figure 6 shows a top view of Figure 5;
Figure 7 shows a sectional view according to the line VII-VII in Figure 6;
Figure 8 shows a side view of the second portion of the quick fastening means;
Figure 9 shows a partially sectional side view of the quick fastening means in an engagement position of the first portion with a constraint pivot in a first position in a constraint slot of the first portion, said constraint pivot is engaged in a locking notch of the second portion;
Figure 10 shows a side view of another side of Figure 9;
Figure 11 shows the partially sectional side view in Figure 9 with the constraint pivot in a second position in the constraint slot, said constraint pivot is disengaged from the locking notch of the second portion;
Figure 12 shows a side view of the other side of Figure 11.

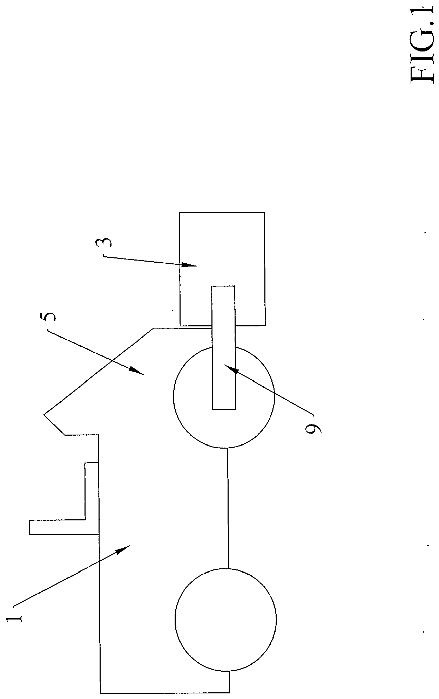

With reference to the figures listed above, a lawnmower 1 is noted comprising quick fastening means 9 between a front portion 5 of the lawnmower 1 and a frontal implement 3 of the lawnmower 1 (Figure 1). Said frontal implement 3 is separably mountable with the front portion 5 of the lawnmower 1 in the front driving direction of the lawnmower 1 so a s to advantageously permit an operator sitting on the lawnmower 1 to control the operations of the frontal implement 3.

The frontal implement 3 can be included in a list of implements comprising for example a cutting plate and a snowplow.

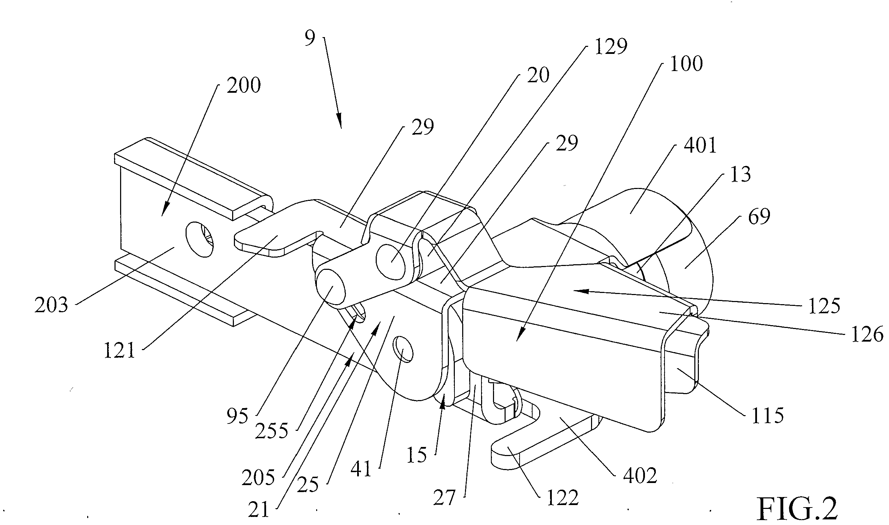

As shown in particular in Figures 2-3, the quick fastening means 9 comprise two portions 100, 200 which are separably mountable to each other.

A first portion 100 of the quick fastening means 9 comprises a rotating portion 21, two brackets 401, 402, a hub 69, an extension 115, a lever 125 and a recall spring 450.

Said first portion 100 of the quick fastening means 9 is rotatably associated with the front portion 5 of the lawnmower 1 identifying a rotation axis R. Said rotation axis R coincides with an axis of the front wheels of the lawnmower 1, said axis of the front wheels is parallel to a transversal axis T. Said front wheels are rotatably mounted with the front portion 5 of the lawnmower 1. Said first portion 100 of the quick fastening means 9 is rotatably associated with the axis of the front wheels of the lawnmower 1.

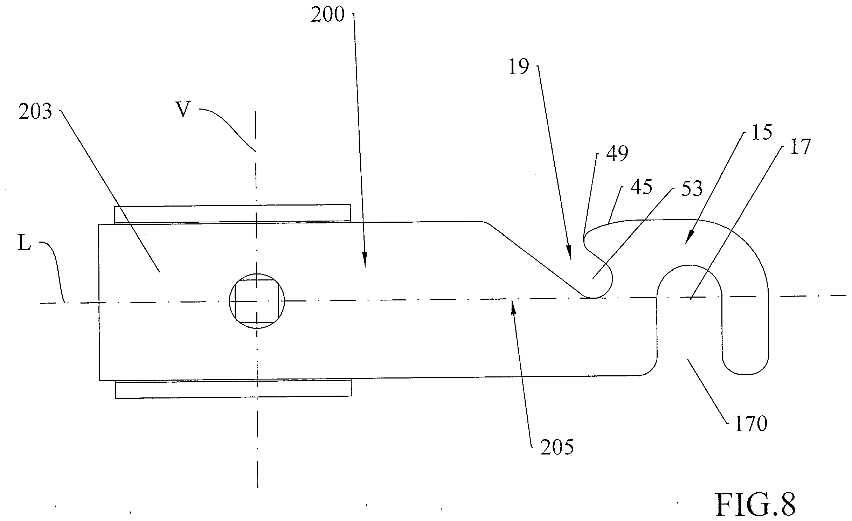

As shown in particular in Figure 8, a second portion 200 of the quick fastening means 9 is fixed to the frontal implement 3. Said second portion 200 is an arm 200 comprising a first extremity 203 and a second extremity 205. The first extremity 203 of the arm 200 is integrally fixed to the frontal implement 3 of the lawnmower 1. The second extremity 205 of the arm 200 comprises a locking notch 19 and an extension 15 which extends towards the back of the lawnmower 1 along a longitudinal axis L. Said second extremity 205 of the arm 200 is separably mountable in a quick manner with the first portion 100 of the quick fastening means 9.

The arm 200 is a flat bar the main dimensions of which are a length of the arm 200 measured along the longitudinal axis L and a height of the arm 200 measured along a vertical axis V with respect to the ground. The arm 200 is arranged on a geometric longitudinal plane A which is identified by the longitudinal axis L and by the vertical axis V. The arm 200 is flat since a thickness of the arm 200 which is measured along the transversal axis T has very small dimensions with respect to the height and length of the arm 200. The transversal axis T is parallel to the rotation axis R and to the axis of the front wheels of the lawnmower 1.

The extension 15 comprises a U-shaped hook slot 17 facing downwards along the vertical axis V. Said hook slot 17 of the extension 15 of the arm 200 comprises an opening 170 of the U facing downwards to form a hook.

As shown in particular in Figures 2-7, 9-12, said rotating portion 21 of the first portion 100 of the quick fastening means 9 is a folded metal sheet with a U-shaped cross section. The cross section of the rotating portion 21 is identified by a geometric transversal plane ∑ which in turn is identified by the transversal axis T and by the vertical axis V. Said rotating portion 21 comprises two parallel sheets 25, 27 mutually arranged along the geometric longitudinal plane A: an outer sheet 25 and an inner sheet 27 and a transversal sheet 29 which is a spacer therebetween which is arranged along the transversal axis T so as to form the U-shaped cross section. Said transversal sheet 29 connects an extremity of the outer sheet 25 to an extremity of the inner sheet 27. The extremity of the outer sheet 25 and the extremity of the inner sheet 27 connected by the transversal sheet 29 face the same direction. The transversal sheet 29 permits to keep the outer sheet 25 and the inner sheet 27 at a certain fixed distance. The outer sheet 25 and the inner sheet 27 are perpendicular to the rotation axis R.

The outer sheet 25 and the inner sheet 27 of the rotating portion 21 comprise a respective transversal place 31 within which an engaging pivot 41 is mounted. The engaging pivot 41 is transversely arranged between the outer sheet 25 and the inner sheet 27 of the rotating portion 21 and the engaging pivot 41 is arranged along a roto-translation axis E which is parallel to the rotation axis R. The roto-translation axis E is at a longitudinal distance D with respect to the rotation axis R so that a center 30 of a longitudinal section of the engaging pivot 41 is at the longitudinal distance D with respect to the rotation axis R. The longitudinal distance D puts the rotation axis R off-axis with respect to the roto-translation axis E. The longitudinal distance D is advantageously adapted to keep a belt between the lawnmower 1 and the frontal implement 3 in tension during the entire rotation of the first portion 100 of the quick fastening means 9 about the rotation axis R.

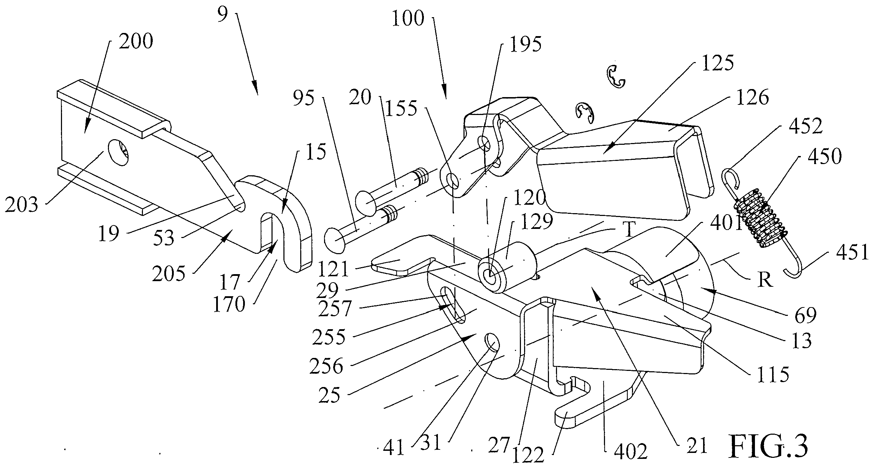

The hook slot 17 of the extension 15 of the arm 200 is adapted to be separably and rotatably associated with an outer surface of the engaging pivot 41 of the rotating portion 21. The hook slot 17 has a longitudinal size comparable to the geometric diameter of the longitudinal section of the engaging pivot 41 as shown in particular in Figures 3-12.

The transversal sheet 29 permits to keep the outer sheet 25 and the inner sheet 27 at a transversal distance corresponding to that of the thickness of the extension 15 with the hook slot 17 so that the outer sheet 25 and the inner sheet 27 have a driving function for the extension 15 of the arm 200 and permit to keep the hook slot 17 of the arm 200 in place above the outer surface of the engaging pivot 41 of the rotating portion 21 of the first portion 100 of the quick fastening means 9.

The engaging pivot 41 has a transversal size which coincides with the thickness of the extension 15 of the arm 200.

From the inner sheet 27 of the rotating portion 21 of the first portion 100 of the quick engaging means 9 two bracket 401, 402 extend, which are directed along the direction of the rotation axis R and towards the inside of the lawnmower 1. The two brackets 401, 402 are one upper bracket 401 and one lower bracket 402 which are parallel to each other.

The hub 69 of the first portion 100 of the quick fastening means 9 is firmly welded to the rotating portion 21 by means of the two bracket 401, 402.

The hub 69 is cylindrical in shape. Said hub 69 comprises a transversal through hole 13 which is disposed along the direction of the rotation axis R and is adapted to engage said axis of the front wheel of the lawnmower 1. The rotation axis R passes from a geometric center 10 of a geometric longitudinal section of the transversal through hole 13 of the hub 69.

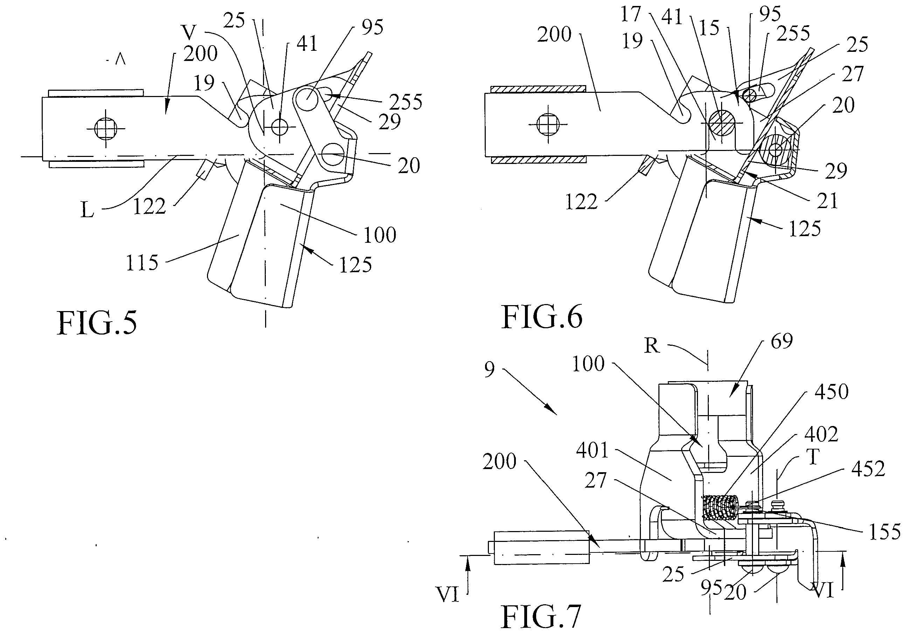

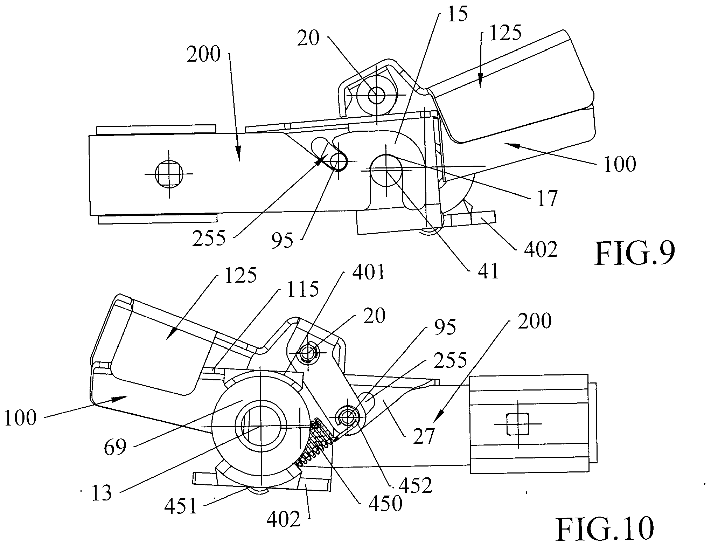

The first portion 100 of the quick fastening means 9 rotates about the rotation axis R passing from a disengagement position which permits the disengagement of the arm 200 (Figures 5, 6) to an engagement position which does not permit the disengagement of the arm 200 (Figure 9).

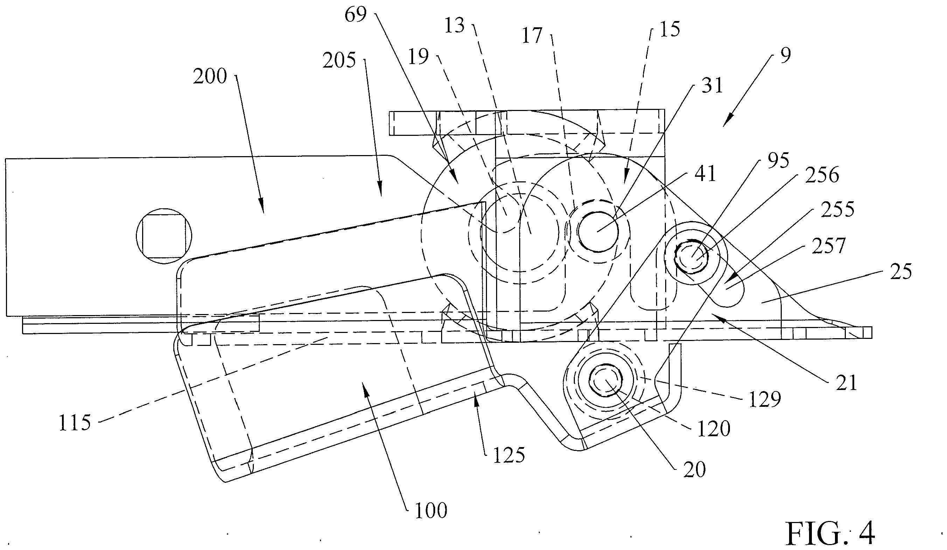

In the disengagement position of the first portion 100 of the quick fastening means 9, as shown in Figures 4-7, the U-shaped cross section of the rotating portion 21 faces upwards, namely the transversal sheet 29 of the rotating portion 21 faces downwards and permits the insertion from the top of the hook slot 17 of the extension 15 of the arm 200 which is positioned above the outer surface of the engaging pivot 41 until the hook slot 17 completely rests on top of the outer surface of the engaging pivot 41. The insertion from the top of the hook slot 17 is guided within the outer sheet 25 and the inner sheet 27 of the rotating portion 21.

As shown in Figures 9-12, in the engagement position of the first portion 100 of the quick fastening means 9, the U-shaped cross section of the rotating portion 21 faces downwards, namely the transversal sheet 29 of the rotating portion 21 faces upwards and does not permit the disengagement of the hook slot 17 of the extension 15 of the arm 200.

During the rotation of the first portion 100 of the quick fastening means 9 about the rotation axis R, the engaging pivot 41 rotates in turn about the rotation axis R.

The inner surface of the hook slot 17 of the arm 200 is in sliding contact with the outer surface of the engaging pivot 41 during the rotation of the first portion 100 of the quick fastening means 9 about the rotation axis R. The hook slot 17 has the opening 170 of the U always facing downwards during the passage from the disengagement position to the engagement position of the first portion 100 of the quick fastening means 9.

As shown in Figures 2-3, 9-12 considering the engagement position of the first portion 100 of the quick fastening means 9, the transversal sheet 29 of the rotating portion 21 of the first portion 100 of the quick fastening means 9 extends in the direction of the longitudinal axis L with the extension 115 of the first portion 100 of the quick fastening means 9. The extension 115 is directed towards the back of the lawnmower 1 when the first portion 100 of the quick fastening means 9 is in the engagement position.

The rotating portion 21 comprises a transversal hinge through hole 129 adapted to rotatably mount the lever 125. In particular, the transversal sheet 29 of the rotating portion 21 mounts a hinge cylinder 129 of the rotating portion 21 which comprises a transversal hinge through hole 120. The lever 125 of the first portion 100 of the quick fastening means 9 comprises two hinge places 195 which overlap the transversal hinge through hole 120 and permit a hinge pivot 20 of the rotating portion 21 to pass through the two hinge places 195 of the lever 125 and the transversal hinge through hole 120 of the rotating portion21, thus pivoting the lever 125 with the rotating portion 21.

The lever 125 is a sheet comprising an elongated portion 126 which overlaps, at least for one portion, the extension 115 of the rotating portion 21. The lever 125 rotates on the hinge pivot 20 of the rotating portion 21 and is constrained in the rotational movement by the elongated portion 126 adapted to enter in contact with the extension 115 of the rotating portion 21.

Another constraint of the movement of the lever 125 is given by a constraint pivot 95 of the rotating portion 21.

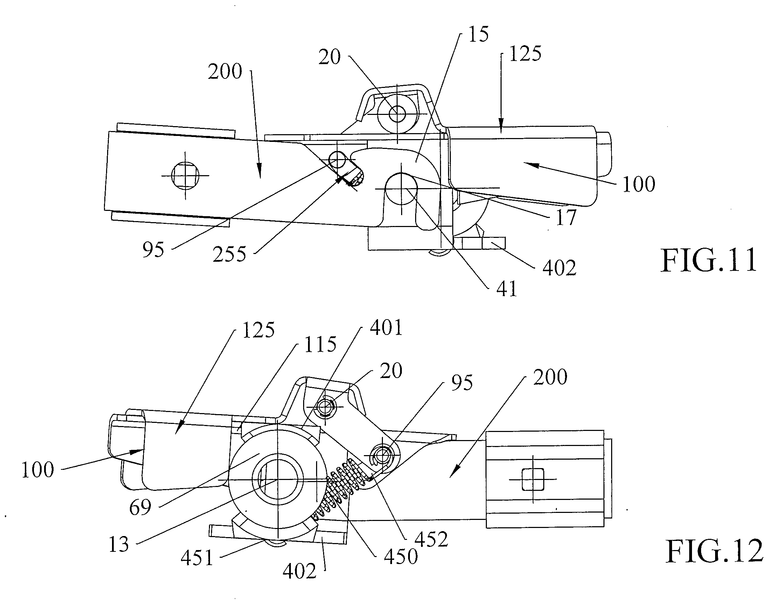

The transversal sheet 29 extends in a first extension 121 outwards in a direction parallel to the rotation axis R, as shown in particular in Figures 2 and 3. Said first extension 121 is adapted to be pressed by a user who wants to rotate the rotating portion 21. The first extension 121 also serves the function as stroke-end stop for the rotating portion 21, as seen in Figures 2 and 11, in which the first extension 121 abuts against an upper surface of the arm 200.

The lower bracket 402 extends in a second extension 122 outwards in a direction parallel to the rotation axis R, as shown in particular in Figures 2 and 3. Said second extension 122 serves the function to constrain the clockwise rotation of the rotating portion 21 about the rotation axis R, when the first portion 100 is at the disengagement position, as shown in Figures 5 and 6. In fact, the second extension 122 of the lower bracket 402 of the first portion 100 abuts against a lower surface of the arm 200.

Advantageously, said first extension 121 and second extension 122 are pressed by a foot of the user without having to lean and without having to use the hands.

The outer sheet 25 and the inner sheet 26 of the rotating portion 21 comprise a constraint slit 255 which is shaped as a circumference arc. The outer sheet 25 comprises an outer constraint slit 255 corresponding on the other side to an inner constraint slit 255 which is obtained in the inner sheet 27 of the rotating portion.

The lever 125 comprises two constraint places 155 which overlap the constraint slits 255 of the rotating portion 21 and permit the constraint pivot 95 to pass through and pivot the rotating portion 21 with the lever 125, thus constraining the movement of the lever 125 within the circumference arc identified by the constraint slit 255 of the rotating portion 21.

The lever 125 rotates about the hinge pivot 20 of the rotating portion 21 from an abutment position of the elongated portion 126 of the lever 125 against the extension 115 of the rotating portion 21 which coincides with a first stop position of the constraint pivot 95 at one extremity 256 of the two extremities of the constraint slit 255, to a second stop position of the constraint pivot 95 at the other extremity 257 of the constraint slit 255.

The constraint pivot 95 is adapted to enter the locking notch 19 of the arm 200 when the constraint pivot 95 is at a first position inside the constraint slit 255, said recall spring 450 keeps the first position of the constraint pivot 95 in place.

The second portion 200, namely the arm 200 of the fastening means 9 comprises the locking notch 19 which is placed in an opposing direction with respect to the extension 15 comprising the hook slot 17. Said locking notch 19 of the arm 200 of the fastening means 9 comprises a lead-in portion 45, a shoulder portion 49 and a further recessed portion 53 which follows the shoulder portion 49, in which said further recessed portion 53 is obtained in the direction of the extension 15 comprising the hook-shaped slot 17.

When the first portion 100 of the quick fastening means 9 is in the disengagement position and is constrained to the clockwise rotation by the abutment of the arm 200 against the second extension 122, the portion 100 may be rotated by pressing the first extension 121 of the transversal sheet 29 of the first portion 100 until the constraint pivot 95 passes from the second stop position (Figure 11) to the first stop position (Figure 9) so that the constraint pivot 95 penetrates the locking notch 19 to be positioned inside the further recessed portion 53 of the locking notch 19, thus fastening the arm 200 with the first portion 100 of the quick fastening means 9 and thus fastening the front portion 5 of the lawnmower 1 with the frontal implement 3 in an advantageously safe and stable manner.

The first stop position of the constraint pivot 95 is kept stable by means of the recall spring 450 (Figures 9 and 10).

The lower bracket 402 of the rotating portion 21 integrally mounts a first extremity 451 of the recall spring 450. A second extremity 452 of the recall spring 450 is integrally mounted with the lever 125. In particular, the second extremity 452 of the recall spring 450 is engaged with the lever 125 by means of the constraint pivot 95 in turn arranged at the constraint place 155. The constraint place 155 is opposite to the elongated portion 126 of the lever 125 with respect to the hinge pivot 20. By pressing the elongated portion 126 of the lever 125 downwards to abut against the extension 115 of the rotating portion 21, the constraint pivot 95 passes from the first stop position (Figure 9) to the second stop position (Figure 11) leaving the locking notch 19 of the arm 200 and permitting the first portion 100 of the quick fastening means 9 to rotate about the rotation axis R to the constraint given by the abutment of the arm 200 against the second extension 122, advantageously permitting the first portion 100 of the quick fastening means 9 to pass from the engagement position to the disengagement position and disengage the arm 200 from the first portion 100 of the quick fastening means 9.

As regards the operation of the quick fastening means 9, starting from a disengagement position of the first portion 100 of the quick fastening means 9 in which the hook slot 17 of the arm 200 engages the engaging pivot 41 of the rotating portion 21, the first portion 100 of the quick fastening means 9 rotates about the rotation axis R to an engagement position in which the transversal sheet 29 of the rotating portion locks the escaping of the hook slot 17 of the extension 15 of the arm 200 out of the engaging pivot 41 of the rotating portion 21 of the first portion 100 of the quick fastening means 9. In said engagement position of the first portion 100 of the quick fastening means 9, the constraint pivot 95 passes to the first stop position inside the constraint slit 255 which coincides with the position of the constraint pivot 95 inside the further recessed portion 53 in the locking notch 19 of the arm 200. The recall spring 450 passes from a resting position, in which the elongated portion 126 of the lever 125 is raised from the extension 115 of the rotating portion 21 and the constraint pivot 95 is at the first stop position inside the constraint slit 255 of the rotating portion 21, to an elongated position of the recall spring 450, in which the elongated portion 126 of the lever 125 abuts against the extension 115 of the rotating portion 21 for then returning to a resting position in which the elongated portion 126 of the lever 125 is raised from the extension 115 of the rotating portion 21 and the constraint pivot 95 is in the second stop position inside of the constraint slit 255 of the rotating portion 21. In said second stop position inside the constraint slit 255 of the rotating portion 21, the constraint pivot 95 is taken out of the locking notch 19 of the arm 200 thus permitting the first portion 100 of the quick fastening means 9 to rotate about the rotation axis R and pass from the engagement position to the disengagement position of the first portion 100 of the quick fastening means 9 and permit the arm 200 to be disengaged from the first portion 100 of the quick fastening means 9 and permit the disengagement of the frontal implement 3 from the front portion 5 of the lawnmower 1.

Alternatively, said rotation axis R is different from the axis of the front wheel of the lawnmower 1, but said rotation axis R is placed along a direction parallel to the axis of the front wheel of the lawnmower 1.

Again alternatively, the rotating portion 21 is provided to only comprise the lower bracket 402 which welds the hub 69. Said lower bracket 402 is necessary and advantageous to connect an extremity of the recall spring 450.

A further alternative includes the rotating portion 21 comprising only one constraint slit 255 which is shaped as a circumference arc, and the constraint pivot 95 of the first portion 100 engaging the lever 125 with the constraint slit 255 of the rotating portion 21 constraining the movement of the lever 125 adapted to rotate about the hinge pivot 20.

Advantageously, the manufacture of the lawnmower 1 comprising the fastening means 9 between a front portion 5 of the lawnmower 1 and the frontal implement 3 of the lawnmower 1 allows a quick connection between lawnmower 1 and frontal implement 3, which is not wedged. The fastening means 9 of the lawnmower advantageously also permit a safe connection in view of vibrations and jamming or ground resistances.

In order to uncouple the frontal implement 3 from the lawnmower 1, it is advantageously sufficient a single easy operation of pressing the lever 125 until it is in abutment against the extension 115 of the rotating portion 21, making the constraint pivot 95 leave the locking notch 19 of the arm 200, rotating the first portion 100 about the rotation axis R with the same movement.

Advantageously, the quick fastening means 9 are smaller and compact in size and easier to be handled.

## Claims

1. Lawnmower (1) comprising a quick fastening means (9) between a front portion (5) of the lawnmower (1) and a frontal implement (3) of the lawnmower (1), said frontal implement (3) is separably mountable with the front portion (5) of the lawnmower (1), said quick fastening means (9) comprise a first portion (100) and a second portion (200), said first portion (100) of the quick fastening means (9) is rotatably associated with the front portion (5) of the lawnmower (1) identifying a rotation axis (R), said second portion (200) of the quick fastening means (9) is fixed with the frontal implement (3) of the lawnmower (1), said first portion (100) of the quick fastening means (9) comprise a rotating portion (21), at least one bracket (401, 402), a hub (69), an extension (115), said rotating portion (21) of the first portion (100) of the quick fastening means (9) is a folded sheet with a transversal section of U-shape and comprises an outer sheet (25) and an inner sheet (27) that are parallel to each other and a transversal sheet (29) which is a spacer between the outer sheet (25) and the inner sheet (27), said rotating portion (21) comprises an engaging pivot (41) which is transversely disposed between the outer sheet (25) and the inner sheet (27) of the rotating portion (21) along a roto-translation axis (E) which is parallel with the rotation axis (R), said roto-translation axis (E) is arranged to a longitudinal distance (D) with respect to the rotation axis (R), said second portion (200) of the quick fastening means (9) comprises a first extremity (203) integrally fixed to the frontal implement (3) of the lawnmower (1) and a second extremity (205) which comprises a locking notch (19) and an extension (15) which extends towards the back of the lawnmower (1) along a longitudinal axis (L), said second extremity (205) of the second portion (200) of the quick fastening means (9) is separably and quickly mountable with the first portion (100) of the quick fastening means (9), the extension (15) comprises a hook slot (17) of U-shape facing downwards along the vertical axis (V), said hook slot (17) is adapted to be separably and rotatably associated with an outer surface of the engaging pivot (41) of the rotating portion (21), the locking notch (19) is disposed in a direction opposed to the extension (15) comprising the hook slot (17), said hub (69) of the first portion (100) of the quick fastening means (9) is firmly welded with the rotating portion (21) by means of said at least one bracket (401, 402), said hub (69) comprises a transversal through hole (13) which is disposed along the direction of the rotation axis (R) and is adapted to engage said axis of the front wheel of the lawnmower (1), said extension (115) extends from the rotating portion (21) towards the direction of the longitudinal axis (L), the first portion (100) of the quick fastening means (9) rotates about the rotation axis (R) passing from a disengagement position which permits the disengagement of the second portion (200) to an engagement position which does not permit the disengagement of the second portion (200), during a rotation of the first portion (100) of the quick fastening means (9) about the rotation axis (R) the engaging pivot (41) rotates about the rotation axis (R) in its turn, **characterized in that** said first portion (100) of the quick fastening means (9) comprises a lever (125) and a recall spring (450), said lever (125) is pivoted with the rotating portion (21) by means of a hinge pivot (20) of the first portion (100), the lever (125) comprises an elongated portion (126) which overlaps for at least a portion to the extension (115) of the rotating portion (21), the rotational movement of the lever (125) rotating about the hinge pivot (20) is constrained by the elongated portion (126) adapted to enter in contact with the extension (115) of the rotating portion (21), the rotating portion (21) comprises at least one constraint slit (255) which is of circumference arc shape, a constraint pivot (95) of the first portion (100) engages the lever (125) and the constraint slit (255) of the rotating portion (21) constraining the rotational movement of the lever (125) within the circumference arc identified by the constraint slit (255) of the rotating portion (21), the constraint pivot (95) is adapted to enter the locking notch (19) of the second portion (200) of the quick fastening means (9) when the constraint pivot (95) is at a first position inside the constraint slit (255), said recall spring (450) keeps in place the constraint pivot (95) at the first position inside the constraint slit (255).

2. Lawnmower (1) according to the claim 1, **characterized in that** the lever (125) rotates about the hinge pivot (20) from an abutment position of the elongated portion (126) of the lever (125) against the extension (115) of the rotating portion (21) which coincides with a second stop position of the constraint pivot (95) at one extremity (257) of two extremities of the constraint slit (255), to a first stop position of the constraint pivot (95) at one other extremity (256) of the constraint slit (255).

3. Lawnmower (1) according to anyone of the claims 1 or 2, **characterized in that** when the first portion (100) of the quick fastening means (9) is at the engagement position, it is possible to rotate the lever (125) of the first portion (100) by pressing the elongated portion (126) of the lever (125) towards the extension (115) of the rotating portion (21) until the constraint pivot (95) passes from one first stop position to one second stop position so that the constraint pivot (95) leaves the locking notch (19) permitting the rotation of the first portion (100) until the first portion (100) passes to one disengagement position and permits the disengagement of the frontal implement 3 from the front portion 5 of the lawnmower 1.

4. Lawnmower (1) according to anyone of the claims 1-3, **characterized in that** said at least one bracket (401, 402) is a lower bracket (402) of the first portion (100) of the quick fastening means (9), said lower bracket (402) integrally mounts a first extremity (451) of the recall spring (450), a second extremity (452) of the recall spring (450) is integrally mounted with the lever (125).

5. Lawnmower (1) according to the claim 4, **characterized in that** the second extremity (452) of the recall spring (450) engages the lever (125) by means of the constraint pivot (95) which is disposed into a constraint place (155) of the lever (125), said constraint place (155) of the lever (125) is opposite the elongated portion (126) of the lever (125) with respect to the hinge pivot (20).

6. Lawnmower (1) according to anyone of the claims 4 or 5, **characterized in that** said transversal sheet (29) extends with a first extension (121) outwards towards a direction which is parallel to the rotation axis (R), said first extension (121) is adapted to be pressed for rotating the rotating portion (21), the first extension (121) is adapted to abut against an upper surface of the second portion (200) constraining the rotation of the first portion (100), said lower bracket (402) extends with a second extension (122) outwards towards a direction which is parallel to the rotation axis (R), said second extension (122) constraints the rotation of the rotating portion (21) about the rotation axis (R), the second extension (122) of the lower bracket (402) of the first portion 100 is adapted to abut against a lower surface of the second portion (200) constraining the rotation of the first portion (100).

## Patentansprüche

1. Rasenmäher (1) mit einer Schnellbefestigungseinrichtung (9) zwischen einem vorderen Bereich (5) des Rasenmähers (1) und einem Frontalwerkzeug (3) des Rasenmähers (1), wobei das Frontalwerkzeug (3) an dem vorderen Bereich (5) des Rasenmähers (1) lösbar anbringbar ist, wobei die Schnellbefestigungseinrichtung (9) einen ersten Bereich (100) und einen zweiten Bereich (200) aufweist, wobei der erste Bereich (100) der Schnellbefestigungseinrichtung (9) dem vorderen Bereich (5) des Rasenmähers (1) unter Bildung einer Rotationsachse (R) drehbar zugeordnet ist, wobei der zweite Bereich (200) der Schnellbefestigungseinrichtung (9) an dem Frontalwerkzeug (3) des Rasenmähers (1) festgelegt ist, wobei der erste Bereich (100) der Schnellbefestigungseinrichtung (9) einen Rotationsbereich (21), mindestens eine Halterung (401, 402), eine Nabe (69) und einen Fortsatz (115) aufweist, wobei der Rotationsbereich (21) des ersten Bereichs (100) der Schnellbefestigungseinrichtung (9) ein gefalteter Flächenkörper mit einem transversalen U-förmigen Querschnitt ist und einen äußeres Flächenbereich (25) und einen inneren Flächenbereich (27), die parallel zueinander sind, sowie einen transversalen Flächenbereich (29) aufweist, bei dem es sich um einen Abstandshalter zwischen dem äußeren Flächenbereich (25) und dem inneren Flächenbereich (27) handelt, wobei der Rotationsbereich (21) einen Eingriffszapfen (41) aufweist, der quer zwischen dem äußeren Flächenbereich (25) und dem inneren Flächenbereich (27) des Rotationsbereichs (21) entlang einer Rotations-Translationsachse (E) angeordnet ist, die parallel zu der Rotationsachse (R) ist, wobei die Rotations-Translationsachse (E) über eine Längserstreckungsdistanz (D) in Bezug auf die Rotationsachse (R) angeordnet ist, wobei der zweite Bereich (200) der Schnellbefestigungseinrichtung (9) eine erste Extremität (203) aufweist, die an dem Frontalwerkzeug (3) des Rasenmähers (1) in integraler Weise festgelegt ist, sowie eine zweite Extremität (205) aufweist, die eine Verriegelungskerbe (19) und einen Fortsatz (15) aufweist, der sich entlang einer Längsachse (L) in Richtung auf die Rückseite des Rasenmähers (1) erstreckt, wobei die zweite Extremität (205) des zweiten Bereichs (200) der Schnellbefestigungseinrichtung (9) an dem ersten Bereich (100) der Schnellbefestigungseinrichtung (9) lösbar und schnell montierbar ist, wobei der Fortsatz (15) einen U-förmigen Hakenschlitz (17) aufweist, der entlang der vertikalen Achse (V) nach unten weist, wobei der Hakenschlitz (17) dazu ausgebildet ist, mit einer Außenfläche des Eingriffszapfens (41) des Rotationsbereichs (21) lösbar und drehbar verbunden zu werden, wobei die Verriegelungskerbe (19) in einer zu dem Fortsatz (15) mit dem Hakenschlitz (17) entgegengesetzten Richtung angeordnet, wobei die Nabe (69) des ersten Bereichs (100) der Schnellbefestigungseinrichtung (9) mit dem Rotationsbereich (21) mittels der mindestens einen Halterung (401, 402) fest verschweißt ist, wobei die Nabe (69) eine transversale Durchgangsöffnung (13) aufweist, die entlang der Richtung der Rotationsachse (R) angeordnet ist und dazu ausgebildet ist, mit der Achse des Vorderrads des Rasenmähers (1) zusammenzuwirken, wobei sich der Fortsatz (115) von dem Rotationsbereich (21) in Richtung auf die Längsachse (L) erstreckt, wobei sich der erste Bereich (100) der Schnellbefestigungseinrichtung (9) um die Rotationsachse (R) dreht, wobei er sich unter Durchlaufen einer Freigabeposition, die das Lösen des zweiten Bereichs (200) zulässt, in eine Eingriffsposition bewegt, die das Lösen des zweiten Bereichs (200) nicht zulässt, wobei während einer Rotationsbewegung des ersten Bereichs (100) der Schnellbefestigungseinrichtung (9) um die Rotationsachse (R) sich der Eingriffszapfen (41) wiederum um die Rotationsachse (R) dreht,
**dadurch gekennzeichnet, dass** der erste Bereich (100) der Schnellbefestigungseinrichtung (9) einen Hebel (125) und eine Rückholfeder (450) aufweist, dass der Hebel (125) an dem Rotationsbereich (21) mittels eines Gelenkzapfens (20) des ersten Bereichs (100) verschwenkt wird, dass der Hebel (125) einen länglichen Bereich (126) aufweist, der zumindest einen Bereich des Fortsatzes (115) des Rotationsbereichs (21) überlappt, dass die Rotationsbewegung des Hebels (125), der sich um den Gelenkzapfen (20) dreht, durch den länglichen Bereich (126) eingeschränkt ist, der mit dem Fortsatz (115) des Rotationsbereichs (21) in Kontakt treten kann, dass der Rotationsbereich (21) mindestens einen Beschränkungsschlitz (255) aufweist, der umfangsbogenförmig ausgebildet ist, dass ein Beschränkungszapfen (95) des ersten Bereichs (100) mit dem Hebel (125) und dem Beschränkungsschlitz (255) des Rotationsbereichs (21) zusammenwirkt und die Rotationsbewegung des Hebels (125) innerhalb des Umfangsbogens beschränkt, der von dem Beschränkungsschlitz (255) des Rotationsbereichs (21) gebildet ist, dass der Beschränkungszapfen (95) dazu ausgebildet ist, in die Verriegelungskerbe (19) des zweiten Bereichs (200) der Schnellbefestigungseinrichtung (9) einzutreten, wenn sich der Beschränkungszapfen (95) in einer ersten Position innerhalb des Beschränkungsschlitzes (255) befindet, wobei die Rückholfeder (450) den Beschränkungszapfen (95) in der ersten Position innerhalb des Beschränkungsschlitzes (255) an Ort und Stelle hält.

2. Rasenmäher (1) nach Anspruch 1,
**dadurch gekennzeichnet, dass** sich der Hebel (125) um den Gelenkzapfen (20) von einer Anlageposition des länglichen Bereichs (126) des Hebels (125) an dem Fortsatz (115) des Rotationsbereichs (21), die mit einer zweiten Stoppposition des Beschränkungszapfens (95) an der einen Extremität (257) von zwei Extremitäten des Beschränkungsschlitzes (255) übereinstimmt, zu einer ersten Stoppposition des Beschränkungszapfens (95) an einer anderen Extremität (256) des Beschränkungsschlitzes (255) rotationsmäßig bewegt.

3. Rasenmäher (1) nach einem der Ansprüche 1 oder 2,
**dadurch gekennzeichnet, dass** dann, wenn sich der erste Bereich (100) der Schnellbefestigungseinrichtung (9) in der Eingriffsposition befindet, der Hebel (125) des ersten Bereichs (100) rotationsmäßig bewegt werden kann, indem der längliche Bereichs (126) des Hebels (125) in Richtung auf den Fortsatz (115) des Rotationsbereichs (21) gedrückt wird, bis sich der Beschränkungszapfen (95) von einer ersten Stoppposition zu einer zweiten Stoppposition bewegt, so dass der Beschränkungszapfen (95) die Verriegelungskerbe (19) verlässt und dadurch die Rotationsbewegung des ersten Bereichs (100) ermöglicht wird, bis der erste Bereich (100) in eine Freigabeposition gelangt und das Lösen des Frontalgeräts (3) von dem vorderen Bereich (5) des Rasenmähers (1) ermöglicht.

4. Rasenmäher (1) nach einem der Ansprüche 1 bis 3,
**dadurch gekennzeichnet, dass** die mindestens eine Halterung (401, 402) eine untere Halterung (402) des ersten Bereichs (100) der Schnellbefestigungseinrichtung (9), dass an der unteren Halterung (402) ein erstes Ende (451) der Rückholfeder (450) integral angebracht ist und dass ein zweites Ende (452) der Rückholfeder (450) an dem Hebel (125) integral angebracht ist.

5. Rasenmäher (1) nach Anspruch 4,
**dadurch gekennzeichnet, dass** das zweite Ende (452) der Rückholfeder (450) mit dem Hebel (125) mittels des Beschränkungszapfens (95) zusammenwirkt, der in einer Beschränkungsposition (155) des Hebels (125) angeordnet ist, wobei sich die Beschränkungsposition (155) des Hebels (125) in Bezug auf den Gelenkzapfen (20) gegenüber von dem länglichen Bereich (126) des Hebels (125) befindet.

6. Rasenmäher (1) nach einem der Ansprüche 4 oder 5,
**dadurch gekennzeichnet, dass** sich der transversale Flächenbereich (29) mit einem ersten Fortsatz (121) nach außen in einer Richtung erstreckt, die parallel zu der Rotationsachse (R) ist, dass der erste Fortsatz (121) dazu ausgebildet ist, zum rotationsmäßigen Bewegen des Rotationsbereichs (21) gedrückt zu werden, dass der erste Fortsatz (121) dazu ausgebildet ist, an einer oberen Oberfläche des zweiten Bereichs (200) anzuliegen, die die Rotationsbewegung des ersten Bereichs (100) einschränkt, dass sich die untere Halterung (402) mit einem zweiten Fortsatz (122) nach außen in einer Richtung erstreckt, die parallel zu der Rotationsachse (R) ist, dass der zweite Fortsatz (122) die Rotationsbewegung des Rotationsbereichs (21) um die Rotationsachse (R) beschränkt, und dass der zweite Fortsatz (122) der unteren Halterung (402) des ersten Bereichs (100) dazu ausgebildet ist, an einer unteren Oberfläche des zweiten Bereichs (200) anzuliegen, die die Rotationsbewegung des ersten Bereichs (100) beschränkt.

## Revendications

1. Tondeuse (1) comprenant un moyen de fixation rapide (9) entre une partie avant (5) de la tondeuse (1) et un accessoire frontal (3) de la tondeuse (1), ledit accessoire frontal (3) peut être monté séparément avec la partie avant (5) de la tondeuse (1), lesdits moyens de fixation rapide (9) comprennent une première partie (100) et une seconde partie (200), ladite première partie (100) des moyens de fixation rapide (9) est associée en rotation avec la partie avant (5) de la tondeuse (1) identifiant un axe de rotation (R), ladite seconde partie (200) des moyens de fixation rapide (9) est fixée avec l'accessoire frontal (3) de la tondeuse (1), ladite première partie (100) des moyens de fixation rapide (9) comprend une partie rotative (21), au moins un support (401, 402), un moyeu (69), une extension (115), ladite partie rotative (21) de la première partie (100) des moyens de fixation rapide (9) est une feuille pliée avec une section transversale en forme de U et comprend une feuille externe (25) et une feuille interne (27) qui sont parallèles entre elles et une feuille transversale (29) qui est un dispositif d'espacement entre la feuille externe (25) et la feuille interne (27), ladite partie rotative (21) comprend un pivot de mise en prise (41) qui est disposé, de manière transversale, entre la feuille externe (25) et la feuille interne (27) de la partie rotative (21) le long d'un axe de roto-translation (E) qui est parallèle à l'axe de rotation (R), ledit axe de roto-translation (E) est agencé sur une distance longitudinale (D) par rapport à l'axe de rotation (R), ladite seconde partie (200) des moyens de fixation rapide (9) comprend une première extrémité (203) fixée, de manière solidaire, à l'accessoire frontal (3) de la tondeuse (1) et une seconde extrémité (205) qui comprend une encoche de blocage (19) et une extension (15) qui s'étend vers l'arrière de la tondeuse (1), le long d'un axe longitudinal (L), ladite seconde extrémité (205) de la seconde partie (200) des moyens de fixation rapide (9) peut être montée de manière séparable et rapide avec la première partie (100) des moyens de fixation rapide (9), l'extension (15) comprend une fente de crochet (17) en forme de U orientée vers le bas le long de l'axe vertical (V), ladite fente de crochet (17) est adaptée pour être associée, de manière séparée et rotative avec une surface externe du pivot de mise en prise (41) de la partie rotative (21), l'encoche de blocage (19) est disposée dans une direction opposée à l'extension (15) comprenant la fente de crochet (17), ledit moyeu (69) de la première partie (100) des moyens de fixation rapide (9) est fermement soudé avec la partie rotative (21) au moyen dudit au moins un support (401, 402), ledit moyeu (69) comprend un trou débouchant transversal (13) qui est disposé le long de la direction de l'axe de rotation (R) et est adapté pour mettre en prise ledit axe de la roue avant de la tondeuse (1), ladite extension (115) s'étend à partir de la partie rotative (21) vers la direction de l'axe longitudinal (L), la première partie (100) des moyens de fixation rapide (9) tourne autour de l'axe de rotation (R) passant d'une position de dégagement qui permet le dégagement de la seconde partie (200) à une position de mise en prise qui ne permet pas le dégagement de la seconde partie (200), pendant une rotation de la première partie (100) des moyens de fixation rapide (9) autour de l'axe de rotation (R), le pivot de mise en prise (41) tourne autour de l'axe de rotation (R) à son tour, **caractérisé en ce que** ladite première partie (100) des moyens de fixation rapide (9) comprend un levier (125) et un ressort de rappel (450), ledit levier (125) est pivoté avec la partie rotative (21) au moyen d'un pivot de charnière (20) de la première partie (100), le levier (125) comprend une partie allongé (126) qui chevauche, pour au moins une partie, sur l'extension (115) de la partie rotative (21), le mouvement de rotation du levier (125) tournant autour du pivot de charnière (20) est contraint par la partie allongée (126) adaptée pour entrer en contact avec l'extension (115) de la partie rotative (21), la partie rotative (21) comprend au moins une fente de contrainte (255) qui a la forme d'une arc circonférentiel, un pivot de contrainte (95) de la première partie (100) met en prise le levier (125) et la fente de contrainte (255) de la partie rotative (21) contraignant le mouvement de rotation du levier (125) dans l'arc circonférentiel identifié par la fente de contrainte (255) de la partie rotative (21), le pivot de contrainte (95) est adapté pour pénétrer dans l'encoche de blocage (19) de la seconde partie (200) des moyens de fixation rapide (9) lorsque le pivot de contrainte (95) est dans une première position à l'intérieur de la fente de contrainte (255), ledit ressort de rappel (450) maintient le pivot de contrainte (95) en place dans la première position à l'intérieur de la fente de contrainte (255).

2. Tondeuse (1) selon la revendication 1, **caractérisée en ce que** le levier (125) tourne autour du pivot de charnière (20) à partir d'une position de butée de la partie allongée (126) du levier (125) contre l'extension (115) de la partie rotative (21) qui coïncide avec une seconde position de butée du pivot de contrainte (95) à une extrémité (257) des extrémités de la fente de contrainte (255), jusqu'à une première position de butée du pivot de contrainte (95) à une autre extrémité (256) de la fente de contrainte (255).

3. Tondeuse (1) selon l'une quelconque des revendications 1 ou 2, **caractérisée en ce que** lorsque la première partie (100) des moyens de fixation rapide (9) est dans la position de mise en prise, il est possible de faire tourner le levier (125) de la première partie (100) en comprimant la partie allongée (126) du levier (125) vers l'extension (115) de la partie rotative (21) jusqu'à ce que le pivot de contrainte (95) passe de la première position de butée à une seconde position de butée de sorte que le pivot de contrainte (95) quitte l'encoche de blocage (19) permettant la rotation de la première partie (100) jusqu'à ce que la première partie (100) passe par une position de dégagement et permette le dégagement de l'accessoire frontal 3 de la partie avant 5 de la tondeuse 1.

4. Tondeuse (1) selon l'une quelconque des revendications 1 à 3, **caractérisée en ce que** ledit au moins un support (401, 402) est un support inférieur (402) de la première partie (100) des moyens de fixation rapide (9), ledit support inférieur (402) monte, de manière solidaire, une première extrémité (451) du ressort de rappel (450), une second extrémité (452) du ressort de rappel (450) est montée, de manière solidaire, avec le levier (125).

5. Tondeuse (1) selon la revendication 4, **caractérisée en ce que** la seconde extrémité (452) du ressort de rappel (450) met en prise le levier (125) au moyen du pivot de contrainte (95) qui est disposé à un emplacement de contrainte (155) du levier (125), ledit emplacement de contrainte (155) du levier (125) est opposé à la partie allongée (126) du levier (125), par rapport au pivot de charnière (20).

6. Tondeuse (1) selon l'une quelconque des revendications 4 ou 5, **caractérisée en ce que** ladite feuille transversale (29) s'étend avec une première extension (121) vers l'extérieur vers une direction qui est parallèle à l'axe de rotation (R), ladite première extension (121) est adaptée pour être comprimée afin de faire tourner la partie rotative (21), la première extension (121) est adaptée pour venir en butée contre une surface supérieure de la seconde partie (200) contraignant la rotation de la première partie (100), ledit support inférieur (402) s'étend avec une seconde extension (122) vers l'extérieur vers une direction qui est parallèle à l'axe de rotation (R), ladite seconde extension (122) contraint la rotation de la partie rotative (21) autour de l'axe de rotation (R), la seconde extension (122) du support inférieur (402) de la première partie 100 est adaptée pour venir en butée contre une surface inférieure de la seconde partie (200) contraignant la rotation de la première partie (100).
